# EUROPEAN PATENT APPLICATION

(11) **EP 2 515 589 A1**
(43) Date of publication of application: **24.10.2012**
(21) Application number: 10858865.8
(22) Date of filing: 24.12.2010
(51) Int. Cl.: H04W 52/36

(54) **METHOD AND SYSTEM FOR OBTAINING ACTUAL POWER HEADROOM OF CARRIER OF UE**

(30) Priority: 29.10.2010 CN 201010527252
(71) Applicant: ZTE Corporation, Shenzhen, Guangdong 518057 (CN)
(72) Inventor: WANG, Man, Shenzhen Guangdong 518057 (CN)
(74) Representative: Price, Nigel John King
(86) International application number: PCT/CN2010/080224
(87) International publication number: WO 2012/055136

(57) **Abstract**

A method for obtaining actual Power Headroom (PHR) of a carrier of a User Equipment (UE) is provided by the present disclosure. The UE transmits the Power Headroom of the carrier corresponding to the UE in the scenario of carrier aggregation to a network side through the interaction message. After processing the received interaction message, the network side obtains the actual PHR of the carrier corresponding to the UE. A system for obtaining actual PHR of a carrier of a User Equipment (UE) is provided by the present disclosure accordingly. With the present disclosure, the network side can effectively obtain the actual PHR of the carrier of the UE in the scenario of carrier aggregation, thus it is convenient for the network side to make the relevant decision and the system performance is improved.

## Description

### TECHNICAL FIELD

The present disclosure relates to the field of radio communication, particularly to a method and system for obtaining actual Power Headroom (PHR) of a carrier of a User Equipment (UE).

### BACKGROUND

With the development of mobile communications, the LTE-advanced, as an enhanced version of Long Term Evaluation (LTE), represented by Carrier Aggregation (CA), relay, Coordinated Multi-Point (CoMP) and other technologies, develops rapidly, the LTE-advanced requires to provide a peak rate of downlink 1Gbit/s and uplink 500Mbit/s within the bandwidth of 100MHz. In order to work in such wide bandwidth, the LTE-advanced introduces the CA technology.

By applying CA technology, scattered frequency spectrum resources may be integrated by means of aggregation to obtain greater bandwidth (>20MHz) and higher data rate, thereby significantly promoting the development of mobile communications. Considering the backward compatibility with LTE, the LTE-advanced introduces the concept of Component Carrier (CC). The maximum bandwidth of each CC is not greater than 20MHz. CC is further divided into an activated CC and a deactivated CC. UE transmits data on the activated CC, while no data are transmitted on the deactivated CC, which does not support the difficult measurements like CQI and is not like an unconfigured CC performing no measurement. Besides, each UE is configured with one Primary Component Carrier (PCC), while the others are all Secondary Component Carrier (SCC).

Meanwhile, we may also see that due to the application of CA technology, the power consumed by a plurality of aggregated carriers is obviously higher than that consumed by a single carrier, which proposes a higher requirement on the performance of some devices of the LTE-advanced system. Further, the synergistic cooperation among carriers also inevitably requires the upper-layer signaling flow to provide cooperation for some new demands, and to report the necessary information that the upper layer needs to learn about and which is generated during the synergistic work among the carriers, to help the network to schedule wireless resources in a better way.

PHR is the difference between actual output power and nominal maximum output power. PHR expresses the potential of a terminal in power increase. It is an important basis for determining cell handover of a terminal and for determining the PCC.

A conventional UE (not in the scenario of CA) needs to report the signal strength (mainly refer to power) of each UE. Then the signal strength of the current cell and that of the adjacent cell are compared to be as a basis for cell handover. In the scenario of CA, the condition is more complex. Reporting only the signal strength of each UE is not enough to support eNB's scheduling on terminals in a network.

In the scenario of CA, a terminal works through the corresponding one or more CCs in one or more frequency bands. When a CC works, the new problem is whether to report the PHR of a single CC, or report the PHR of each CC to a single CC, thereby obtaining the information of the actual PHR. For each CC, whether these subcarriers are PCCs or SCCs and whether the SCCs are activated or deactivated are adjusted continuously and dynamically according to the then network status. Therefore, it is particularly important to obtain the PHR of the UE. The network not only needs to monitor the actual power of the terminals regularly but also needs to know the power distribution of the UE among the subcarriers as well as the room for power increasing of each subcarrier, to determine the distribution of PCCs and SCCs in all subcarriers, and the information carrying capacity of PCCs and SCCs.

### SUMMARY

In view of the above mentioned, the main object of the present disclosure is to provide a method and system for obtaining actual power headroom of a carrier of a UE, which can effectively obtain the actual PHR value of a carrier of a UE in the scenario of CA, to make relevant decisions and improve system performance.

To achieve the foregoing object, the technical solution of the present disclosure is realized in the following way.

A method for obtaining actual PHR of a carrier of a UE, includes the following steps:

a UE reports a PHR value of a carrier corresponding to the UE to a network side through a interaction message; and

the network side processes the PHR value reported by the UE to obtain an actual PHR value of the carrier corresponding to the UE.

The PHR value reported by the UE may be a PHR value of a Primary Component Carrier (PCC) or a PHR value of each carrier.

The step that the UE reports the PHR value of the carrier may include:

the UE reports only the PHR value of the carrier; or

the UE reports the PHR value of the carrier, as well as PHR values of all carriers relevant with the carrier.

The step that the network side processes the PHR value reported by the UE to obtain an actual PHR value of the carrier corresponding to the UE may include:

the network side subtracts a corresponding Maximum Output Power (MPR) value from the PHR value reported by the UE to obtain the actual PHR value of the carrier corresponding to the UE.

The MPR value is an MPR value preset by the network side, or an MPR value reported by the UE through the interaction message.

A system for obtaining actual PHR of a carrier of a UE, which includes: a network side and a UE, wherein,

the network side is configured to:

receive a PHR value of a carrier corresponding to the UE, which is reported by the UE through a interaction message; and

process the PHR value reported by the UE to obtain an actual PHR value of the carrier corresponding to the UE; and

the UE is configured to report the PHR value of the carrier corresponding to the UE to the network side through the interaction message.

The PHR value reported by the UE may be a PHR value of a Primary Component Carrier (PCC) or a PHR value of each carrier.

The UE reporting the PHR value of the carrier may include:

the UE reports only the PHR value of the carrier; or

the UE reports the PHR value of the carrier, as well as PHR values of all carriers relevant with the carrier.

The network side processing the PHR value reported by the UE to obtain an actual PHR value of the carrier corresponding to the UE may include: the network side subtracts a corresponding Maximum Output Power (MPR) value from the PHR value reported by the UE to obtain the actual PHR value of the carrier corresponding to the UE.

The UE may be further configured to report an MPR value through the interaction message.

The network side may be further configured to preset an MPR value.

The present disclosure relates to a method and system for obtaining actual PHR of a carrier of a UE. The UE transmits the PHR of the carrier corresponding to the UE in the scenario of CA to a network side through the interaction message. After processing the received interaction message, the network side obtains the actual PHR of the carrier corresponding to the UE. With the present disclosure, the network side can effectively obtain the actual PHR of the carrier of the UE in the scenario of CA, thus it is convenient for the network side to make the correlative decision and the system performance is improved.

### BRIEF DESCRIPTION OF THE DRAWINGS

Fig. 1 is a schematic flowchart of a method for obtaining actual PHR of a carrier of a UE according to the present disclosure;

Fig. 2 is a schematic flowchart of a method for obtaining actual PHR of a carrier of a UE according to Embodiment 1 of the present disclosure;

Fig. 3 is a schematic flowchart of a method for obtaining actual PHR of a carrier of a UE according to Embodiment 2 of the present disclosure;

Fig. 4 is a schematic flowchart of a method for obtaining actual PHR of a carrier of a UE according to Embodiment 3 of the present disclosure.

### DETAILED DESCRIPTION

The technical problem the present disclosure intends to solve is the issue concerning the reporting of the actual PHR of a UE under the condition that a plurality of CCs are configured in the scenario of CA, in order to solve the problem that the eNB can not accurately know the PHR of the UE in the scenario of CA in the prior art.

The basic principle of the present disclosure: the UE transmits the PHR of the carrier corresponding to the UE in the scenario of CA to a network side through the interaction message. After processing the received interaction message, the network side obtains the actual PHR of the carrier corresponding to the UE.

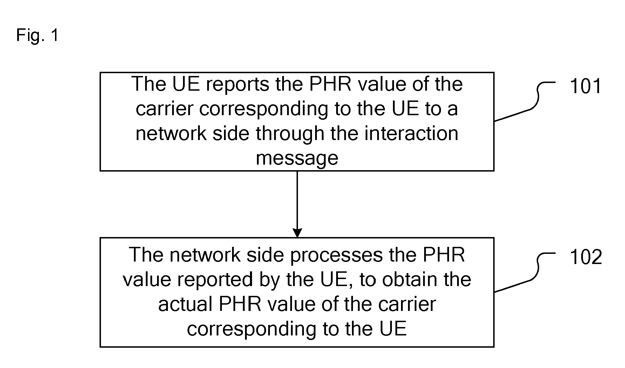

Fig. 1 is a schematic flowchart of a method for obtaining actual PHR of a carrier of a UE according to the present disclosure. As shown in Fig. 1, the method includes the following steps.

Step 101: the UE reports the PHR value of the carrier corresponding to the UE to a network side through the interaction message.

During the reporting, the UE cannot report the PHR value directly, instead, the PHR value is carried into a fixed information format and transmitted by a channel of the physical layer in a uniform way. Here, the UE may report either only the PHR value of the PCC, or the PHR value of each CC.

Step 102: the network side processes the PHR value reported by the UE to obtain the actual PHR value of the carrier corresponding to the UE.

Here, the step that the network side processes the PHR value reported by the UE to obtain the actual PHR value of the carrier corresponding to the UE specifically includes: after receiving the PHR value transmitted by the UE, the network side subtracts the corresponding Maximum Output Power (MPR) value from the PHR value reported by the UE according to the provisions of the network on the configuration of different CCs to obtain the actual PHR value of the carrier corresponding to the UE. It can be seen that actual PHR expresses the actual value of power headroom and is the difference between PHR value and MPR value. This value specifically reflects the room for the actual power increasing of the UE.

Typically, when the UE is configured with only one power amplifier (i.e, one frequency band is configured), there is only one MPR value. When the UE is configured with a plurality of power amplifiers, each power amplifier has an MPR value. In the present disclosure, for the MPR values relevant with the actual PHR values, a plurality of power amplifiers may be generated due to the configuration of a plurality of frequency bands and CCs. MPR values correspond to the number of power amplifiers. The number of power amplifiers is the same as the number of MPR values.

Specifically speaking, when the UE is configured with only one power amplifier, if only the PHR value of the PCC is reported, then the network side obtains the actual PHR value of the PCC through subtracting the MPR value from the PHR value reported by the UE. If the actual PHR values of all CCs are comprehensively considered, then the UE reports the PHR value of each CC, and the network side obtains the actual PHR value of each CC through subtracting the MPR value from the PHR value reported by the UE. It should be noted that the UE reports the PHR value of the carrier means that: the UE reports only the PHR value of the carrier; or the UE reports the PHR value of the carrier and PHR values of all the carriers relevant with the carrier. In other words, for a single CC, only the PHR value of the CC may be reported; or, considering the PHR values of all the CCs relevant with the CC, the PHR values of all the CCs relevant with the CC may be simultaneously reported. When the UE is provided with a plurality of power amplifiers, if the eNB is only interested in the actual PHR value of the PCC, then the UE only needs to report the PHR value of the PCC. If the eNB is interested in the actual PHR value of each CC, then the UE needs to report the PHR value of each CC. It should be noted that: for a single CC, only its actual PHR value may be considered; or the actual PHR values of all the CCs relevant with the single CC may be considered. As for the entire UE, as each CC has considered the MPR during reporting, the actual PHR value of the entire UE is the sum of the actual PHR values of all CCs.

It should be noted that the network side in the present disclosure may be a processor possessing the information processing capacity of a eNB in a general sense, such as a eNB, a relay, or a repeater.

It should be noted that the network side may obtain MPR values in the following two ways, and the way is selected based on the MPR value after the system is determined:

1) the UE reports the MPR value and the PHR value; this way is suitable for the case where the MPR value of the UE is larger (typically, the MPR value is greater than 2dB);

2) the network side presets an MPR value, i.e, reserves a certain margin, such as 1-2dB, for the MPR value during scheduling; during scheduling, this preset value is considered, and this preset MPR value is subtracted directly during the calculation of the actual PHR value; this way is applicable to the case where the MPR is smaller (typically, it is not greater than 2dB).

The present disclosure also provides a system for obtaining actual PHR of a carrier of a UE. The system includes: a network side and a UE, wherein,

the network side is configured to receive the PHR value of the carrier corresponding to the UE, which is reported by the UE through the interaction message, and process the PHR value reported by the UE to obtain the actual PHR value of the carrier corresponding to the UE;

the UE is configured to report the PHR value of the carrier corresponding to the UE to the network side through the interaction message.

The PHR value reported by the UE is the PHR value of the PCC or the PHR value of each carrier.

That the UE reports the PHR value of the carrier includes: the UE reports only the PHR value of the carrier; or the UE reports the PHR value of the carrier, as well as the PHR values of all the carriers relevant with the carrier.

That the network side processes the PHR value reported by the UE to obtain the actual PHR value of the carrier corresponding to the UE includes: the network side subtracts the corresponding MPR value from the PHR value reported by the UE to obtain the actual PHR value of the carrier corresponding to the UE.

The UE is further configured to report the MPR value through the interaction message.

The network side is further configured to preset an MPR value. In the specific setting method, the MPR value of the UE is preset according to the distribution and demodulation modes of the resource blocks of the UE.

Below the implementation of the technical solution of the present disclosure is further elaborated in connection with embodiments.

Embodiment 1

When the UE is configured with only one power amplifier, only one MPR value is involved. In this case, the UE may be configured with only one CC, or configured with two or more than two CCs.

Content reported: only the PHR value of the PCC is reported, and the actual PHR of the PCC is obtained through subtracting the MPR value from the PHR value; or the MPRs of all CCs are comprehensively considered, the PHR value of each CC is reported, and the actual PHR of each CC is obtained through subtracting the MPR value from the PHR value. For a single CC, only the current PHR value of the CC is reported; or, the PHR values of all CCs are considered, and the PHR values of all relevant CCs are listed. For the entire UE, as the MPR is considered during reporting of each CC, the actual PHR value of the entire UE is the sum of the actual PHR values of all CCs. This embodiment is explained by taking for example the case where all CCs are considered.

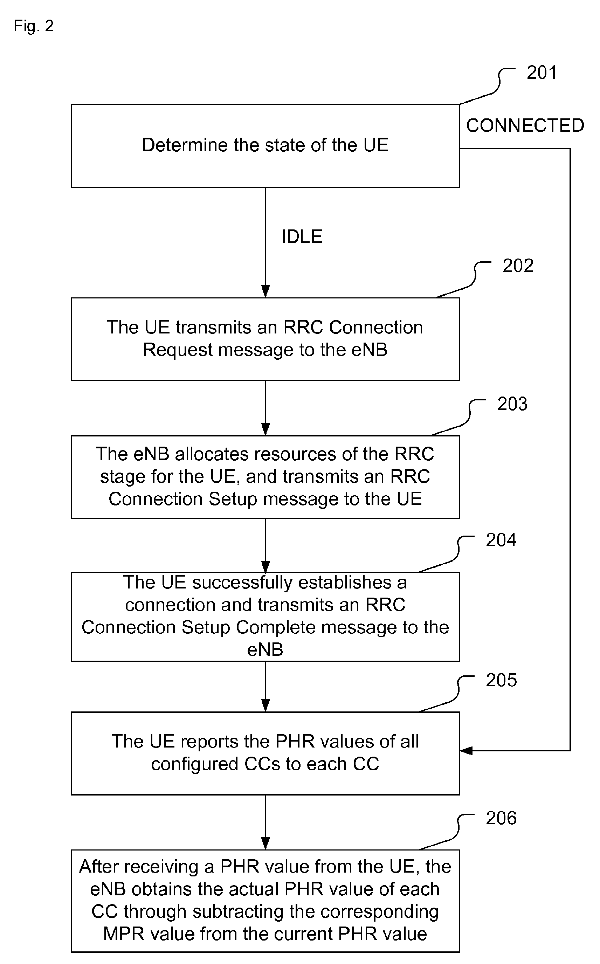

Fig. 2 is a schematic flowchart of a method for obtaining actual PHR of a carrier of a UE according to Embodiment 1 of the present disclosure. As shown in Fig. 2, the method includes the following steps.

Step 201: it is determined whether the terminal is in an IDLE state or a CONNECTED state, if the terminal is in an IDLE state, turn to step 202; and if the terminal is in a CONNECTED state, and UE and the eNB maintain connection and information interaction, turn to step 205.

Step 202: the UE transmits a Radio Resource Control (RRC) Connection Request message to the eNB.

Step 203: the eNB allocates resources of the RRC stage for the UE, and transmits an RRC Connection Setup message to the UE.

Step 204: the UE successfully establishes a connection and transmits an RRC Connection Setup Complete message to the eNB.

Step 205: the UE reports the PHR values of all configured CCs to each CC.

Step 206: after receiving a PHR value from the UE, the eNB obtains the actual PHR value of each CC through subtracting the corresponding MPR value from the current PHR value.

More specifically, the specific message format in which the UE reports the PHR values of all configured CCs to each CC in step 205 may be:

after receiving the acknowledgement of RRC Connected Setup Complete message, the UE requests the eNB to allocate a PUSCH channel transmission time slot for the UE.

After receiving the acknowledgement of time slot allocation, the UE transmits the PHR value to the eNB through a Signal Quality Information message via the PUSCH channel transmission time slot allocated for the UE.

After processing the information, the eNB obtains the actual PHRs of each CC and the entire UE.

Embodiment 2

When the UE is configured with a plurality of power amplifiers, each power amplifier has an MPR value. The main difference between this embodiment and Embodiment 1 is the content reported.

Content reported: only the PHR value of the PCC is reported and the eNB is only interested in the actual PHR of the PCC; or the eNB is interested in the actual PHRs of all the CCs relevant with each CC, the PHR value of each CC is reported. For a single CC, only the actual PHR of the current CC is considered; or the actual PHR of each CC is considered. In this embodiment, the UE reports the PHR value of each CC. For a single CC, it is explained by taking for example the case where only the actual PHR of the current CC is considered.

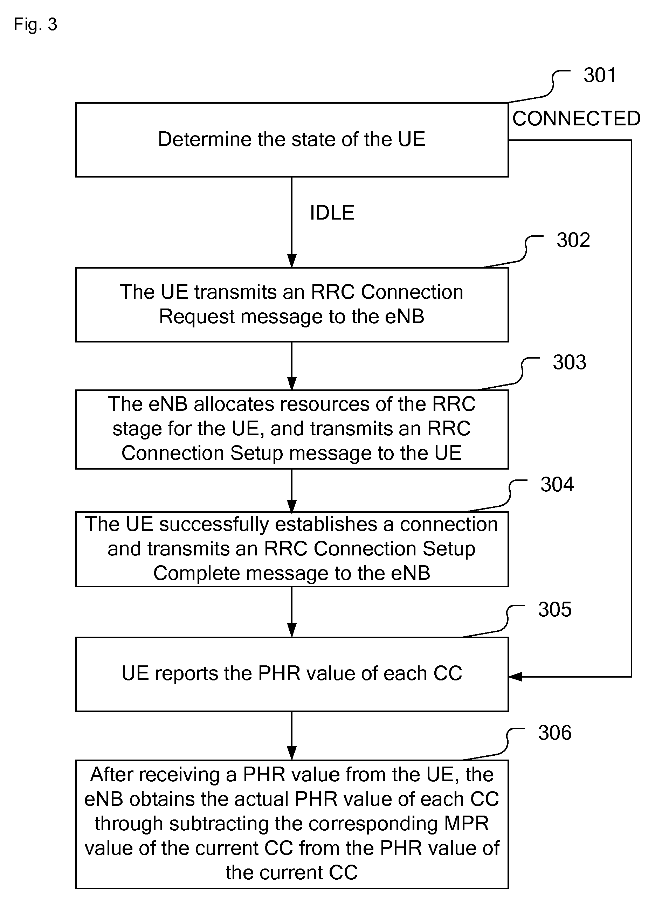

Fig. 3 is a schematic flowchart of a method for obtaining actual PHR of a carrier of a UE according to Embodiment 2 of the present disclosure. As shown in Fig. 3, the method includes the following steps.

Steps 301~S304: these steps are the same as steps 201~204.

Step 305: the UE reports the PHR value of each CC.

Step 306: after receiving a PHR value from the UE, the eNB obtains the actual PHR value of each CC through subtracting the MPR value of the current CC from the PHR value of the current CC.

Embodiment 3

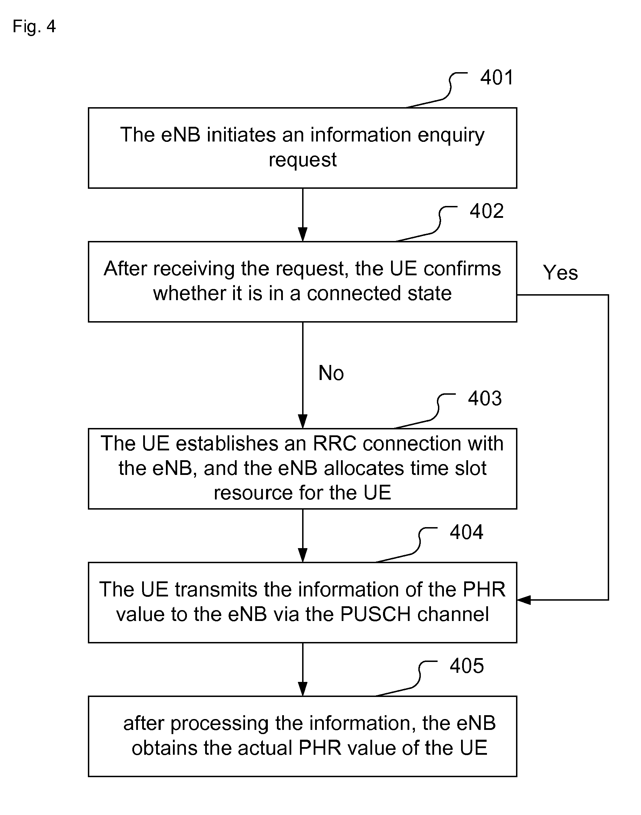

In this embodiment, the eNB desires to obtain the information of the actual PHR value of the UE. Fig. 4 is a schematic flowchart of a method for obtaining actual PHR of a carrier of a UE according to Embodiment 3 of the present disclosure. As shown in Fig. 4, the method includes the following steps.

Step 401: the eNB desires to obtain the information of the actual PHR value of the UE and initiates an information enquiry request (UE Enquiry).

Step 402: after receiving the request, the UE confirms whether it is in an RRC Connected state. If yes, then turn to step 404; if no, then execute step 403.

Step 403: the UE establishes an RRC connection with the eNB, the eNB allocates time slot resource for the UE.

Step 404: the UE transmits the information of the PHR value to the eNB through a a Signal Quality Information message via the PUSCH channel.

Step 405: after processing the information, the eNB obtains the actual PHR value of the UE.

It should be particularly noted that the present disclosure is not limited to the scenario of CA. As long as the UE works at inter-frequency in the same time, the issue of reporting the PHR of each frequency band will be involved. This can be solved by the method for reporting the actual PHR as provided by the present disclosure.

The foregoing descriptions are only preferred embodiments of the present disclosure and are not intended to limit the protection scope of the present disclosure.

## Claims

1. A method for obtaining actual Power Headroom (PHR) of a carrier of a User Equipment (UE), comprising:
reporting, by a UE, a PHR value of a carrier corresponding to the UE to a network side through a interaction message; and
processing, by the network side, the PHR value reported by the UE to obtain an actual PHR value of the carrier corresponding to the UE.

2. The method according to claim 1, wherein the PHR value reported by the UE is a PHR value of a Primary Component Carrier (PCC) or a PHR value of each carrier.

3. The method according to claim 2, wherein reporting the PHR value of the carrier by the UE comprises:
reporting, by the UE, only the PHR value of the carrier; or
reporting, by the UE, the PHR value of the carrier, as well as PHR values of all carriers relevant with the carrier.

4. The method according to any of claims 1 to 3, wherein the processing the PHR value reported by the UE to obtain an actual PHR value of the carrier corresponding to the UE comprises:
subtracting, by the network side, a corresponding Maximum Output Power (MPR) value from the PHR value reported by the UE to obtain the actual PHR value of the carrier corresponding to the UE.

5. The method according to claim 4, wherein the MPR value is an MPR value preset by the network side, or an MPR value reported by the UE through the interaction message.

6. A system for obtaining actual Power Headroom (PHR) of a carrier of a User Equipment (UE), comprising: a network side and a UE; wherein:
the network side is configured to:
receive a PHR value of a carrier corresponding to the UE, which is reported by the UE through a interaction message; and
process the PHR value reported by the UE to obtain an actual PHR value of the carrier corresponding to the UE; and
the UE is configured to report the PHR value of the carrier corresponding to the UE to the network side through the interaction message.

7. The system according to claim 6, wherein the PHR value reported by the UE is a PHR value of a Primary Component Carrier (PCC) or a PHR value of each carrier.

8. The system according to claim 7, wherein the UE reporting the PHR value of the carrier comprises:
the UE reports only the PHR value of the carrier; or
the UE reports the PHR value of the carrier, as well as PHR values of all carriers relevant with the carrier.

9. The system according to any of claims 6 to 8, wherein the network side processing the PHR value reported by the UE to obtain an actual PHR value of the carrier corresponding to the UE comprises: the network side subtracts a corresponding Maximum Output Power (MPR) value from the PHR value reported by the UE to obtain the actual PHR value of the carrier corresponding to the UE.

10. The system according to claim 9, wherein,
the UE is further configured to report an MPR value through the interaction message.

11. The system according to claim 9, wherein,
the network side is further configured to preset an MPR value.
